# EUROPEAN PATENT SPECIFICATION

(11) **EP 2 803 575 B1**
(45) Date of publication and mention of the grant of the patent: **12.10.2022**
(21) Application number: 14167989.4
(22) Date of filing: 12.05.2014
(51) Int. Cl.: B64D 11/02, B64D 11/04, B64D 11/06, B64D 11/00

(54) **Aircraft area**
Flugzeugbereich
Zone d'avion

(30) Priority: 15.05.2013 DE 102013008288
(43) Date of publication of application: 19.11.2014
(73) Proprietor: Airbus Operations GmbH, 21129 Hamburg (DE)
(72) Inventor: Moje, Sabrina, 21129 Hamburg (DE); Breuer, Matthias, 21129 Hamburg (DE)
(74) Representative: Schicker, Silvia

(56) References cited:
- EP-A1- 2 803 577
- EP-A1- 2 956 359
- WO-A2-2012/136327
- US-A1- 2007 233 433
- US-A1- 2009 261 200

## Description

The invention relates to an aircraft area which is formed, in particular, by an area of an aircraft cabin.

A passenger cabin of a modern commercial aircraft usually comprises at least one main aisle which extends along a longitudinal axis of the passenger cabin. Running perpendicularly to the main aisle is at least one door aisle which connects the main aisle(s) to an aircraft door. A lateral boundary of the door aisle may be formed by a side wall of a monument bordering on said door aisle, it being possible to construct, in a part of the side wall of the monument that faces towards the aircraft door, a niche, a so-called "assist space", which is configured in such a way that it is able to accommodate the whole of, or at least most of, a person who is standing up. An aircraft area arrangement of this kind is described, for example, in DE 10 2011 013 049 A1 or WO 2012/119718 A1.

Document US 2009/0261200 A1 describes a space for work and storage at the rear of an aircraft cabin, the work and storage space comprising aircraft monuments arranged within and behind the door aisle farthest to the rear of the aircraft.

In document US 2007/0233433 A1 aircraft cabins having an aircraft monument arranged within a door aisle at the very front or rear of the aircraft cabin are shown.

Document WO 2012/136327 A2 discloses an aircraft cabin segment for delimiting the aircraft cabin to the rear.

The underlying object of the invention is to indicate an aircraft area, the design of which permits efficient use of the space available in the passenger cabin of an aircraft.

This object is achieved by means of an aircraft area having the features in Claim 1.

An aircraft area comprises at least one main aisle which extends along a longitudinal axis of an aircraft cabin. Said at least one main aisle may, for example, separate two passenger seating areas of the aircraft cabin from one another, it being possible for each passenger seating area to have a plurality of rows of passenger seats arranged one behind another with, for example, three passenger seats each. The aircraft area may comprise only one main aisle. It is, however, also conceivable to equip the aircraft area with two main aisles which may extend substantially parallel to each other along the longitudinal axis of the aircraft cabin. The aircraft area also comprises a door aisle which extends, substantially perpendicularly to the at least one main aisle, along a transverse axis of the aircraft cabin between a first and a second aircraft door. The door aisle separates two passenger seat sections of the aircraft cabin. The door aisle may, for example, separate a business class area of the aircraft cabin from an economy class area of said cabin, but may also be located completely within an area of the aircraft cabin which is assigned to a specific class.

Arranged substantially centrally in the door aisle is an aircraft monument. As a result of the arrangement of the aircraft monument in the door aisle, an area of the aircraft cabin which has hitherto been kept free is used for the installation of the monument. The installation space which is used in conventional aircraft cabin layouts for the installation of aircraft monuments can consequently be used in another way, for example for additional passenger seats.

In addition to this, the central arrangement of the aircraft monument in the door aisle makes it possible to use said monument as part of a directing system for emergency evacuations. In particular, the aircraft monument fulfils a guiding function for persons moving along the main aisle towards the aircraft doors, since they are necessarily directed along the outer walls of the aircraft monument towards said doors. This makes it possible, in the event of an emergency evacuation of the aircraft, to increase the door capacity, i.e. to increase the number of persons who are able to leave the aircraft via the aircraft doors per unit of time.

The aircraft monument may have a floor plan which is substantially circular, oval, triangular, square, rectangular or hexagonal. For example, said aircraft monument may be designed in the form of a column having a circular, oval, triangular, square, rectangular or hexagonal floor plan. If desired, the monument may extend as far as a ceiling of the aircraft cabin. An aircraft monument having a hexagonal floor plan is particularly suitable for installation in an aircraft area comprising two main aisles which extend substantially parallel to each other along the longitudinal axis of the aircraft cabin.

Outer walls of the aircraft monument are adapted to serve as means of guidance for passengers who are moving, when disembarking from the aircraft or in the event of an emergency evacuation of said aircraft for example, out of the main aisle towards the first and/or the second aircraft door. In particular, the outer walls of the aircraft monument may be dimensioned and shaped in such a way that they direct the passengers towards the aircraft doors. Furthermore, corners or edges which might hinder the movement of the passengers towards the aircraft doors should be dispensed with when designing the outer walls of the aircraft monument.

The aircraft monument may also be adapted to serve as a sight screen and/or means of separation between two sections of the aircraft area. In particular, the aircraft monument may be dimensioned, and arranged in the aircraft area, in such a way that it serves as a sight screen and/or means of separation between a part of the aircraft cabin which is at the front, with respect to the aircraft monument, and a part of said cabin which is at the rear, with respect to said monument. The sections of the aircraft area which are separated from one another by the aircraft monument may be, for example, two different classes, for example areas of the aircraft cabin which are assigned to economy class and to business class.

If the floor plan of the aircraft monument has at least one corner, said monument is preferably arranged in the door aisle in such a way that at least one corner of the floor plan faces towards a section of a main aisle bordering on the door aisle and is arranged, in particular, substantially centrally with respect to this section of the main aisle. What is achieved by means of this arrangement is that a flow of persons moving along the main aisle towards the aircraft doors is evenly divided and directed along the outer walls of the aircraft monument to the two aircraft doors which are located opposite one another. Consequently, the guiding function, which the aircraft monument fulfils as part of a directing system for emergency evacuations, for persons moving along the main aisle towards the aircraft doors, is enhanced.

If the aircraft monument has a square or rectangular floor plan, said monument is preferably arranged in the door aisle in such a way that two mutually opposed corners of the floor plan face towards two sections of a main aisle which are separated from one another by said door aisle. By this means, the aircraft monument can be used as part of a directing system for emergency evacuations with respect to both the sections of the main aisle that border on the door aisle.

It is, however, also conceivable that the aircraft monument is arranged in the door aisle in such a way that at least one corner of the floor plan faces towards the first and/or the second aircraft door. If the aircraft monument has a square, rectangular or hexagonal floor plan, said monument is may be arranged in the door aisle in such a way that two mutually opposed corners of the floor plan, which may define an acute angle face towards the first and the second aircraft door, respectively. Such an arrangement of the aircraft monument is particularly suitable in an aircraft area comprising two main aisles which extend substantially parallel to each other along the longitudinal axis of the aircraft cabin, since the aircraft monument then guides persons moving along the two main aisle along the outer walls of the aircraft monument towards the aircraft doors.

The shape, the number and/or the arrangement of internal trim components which are adjacent to the aircraft monument in the aircraft area, is/are preferably adapted to the shape and the dimensions of said aircraft monument. For example, monuments adjacent to the aircraft monument which is arranged centrally in the door aisle may have outer walls which are oriented parallel to outer walls, or sections of the outer walls, of said aircraft monument which is arranged centrally in the door aisle. Moreover, a row of passenger seats which is adjacent to the aircraft monument may comprise one passenger seat fewer than a row of passenger seats which is arranged, viewed in the direction of flight of an aircraft equipped with the aircraft area, in front of or behind said row of passenger seats which is adjacent to the aircraft monument. The internal trim components adjacent to the aircraft monument which is arranged centrally in the door aisle are preferably positioned at a distance from said aircraft monument which allows unimpeded passage between the aircraft monument and the adjacent internal trim components.

The aircraft monument may comprise a kitchen module, a stowage compartment module and/or a sanitary module. The combining of various functionalities in a single aircraft monument permits a centralising of systems, for example the centralising of supply systems which are needed for supplying said aircraft monument. By this means it is possible to produce a self-contained aircraft monument, in which the various functional areas can be connected, for example via common connections, to a central water supply system, a central power supply system and/or a central waste water disposal system belonging to the aircraft.

In one preferred form of embodiment of the aircraft area, the aircraft monument comprises at least one flight attendant seat which faces towards a section of a main aisle bordering on the door aisle. In particular, the flight attendant seat may be arranged substantially centrally with respect to said section of the main aisle. As a result of this configuration of the aircraft monument, it is possible to comply with high safety standards, since a person sitting on the flight attendant seat is able to have a clear and unimpeded overview of that area of the aircraft cabin which is arranged in front of the aircraft monument in the direction of viewing of the person sitting on the flight attendant seat.

Said flight attendant seat may comprise a backrest element as well as a seat element. The seat element may be capable of being tilted between a folded-down position of use, in which said seat element extends substantially perpendicularly to the backrest element, and an inoperative position in which the seat element is oriented substantially parallel to said backrest element. This guarantees that the flight attendant seat takes up a reduced volume of installation space when it is not being used. If desired or necessary, the aircraft monument may also comprise two flight attendant seats which face towards two sections of a main aisle which are separated from one another by the door aisle. It is also conceivably possible to equip the aircraft monument with a plurality of flight attendant seats. For example, an aircraft monument which is installed in an aircraft area comprising two main aisles which extend substantially parallel to each other along the longitudinal axis of the aircraft cabin may be equipped with four flight attendant seats, wherein two flight attendant seats are associated with each main aisle.

The aircraft monument may also comprise at least one safety belt arrangement. The number of safety belt arrangements provided on the aircraft monument preferably corresponds to the number of flight attendant seats provided on said aircraft monument, so that each flight attendant seat can be provided with a corresponding safety belt arrangement. Said safety belt arrangement may be fastened to the flight attendant seat or to a wall of the aircraft monument.

The flight attendant seat may be fastened to the floor of the aircraft cabin in a force-transmitting manner. As an alternative to this, however, said flight attendant seat may also be fastened to the aircraft monument by means of a fastening device. The fastening device is then preferably designed and dimensioned in such a way that it is capable of dissipating, via the aircraft monument, a predetermined maximum force which may be introduced into the flight attendant seat when said flight attendant seat is being used. The aircraft monument is then preferably likewise designed and dimensioned in such a way that it is capable of transmitting the maximum force introduced into said monument to the aircraft structure. The maximum force which the fastening device or aircraft monument has to dissipate is predetermined by corresponding licensing regulations. The maximum force in question is, in particular, a calculated maximum force which acts upon the flight attendant seat in an emergency situation. For example, it is possible to assume, as the predetermined maximum force, a force which acts upon the flight attendant seat when it is exposed to an acceleration of 9G or 16G.

The flight attendant seat is preferably displaceable relative to the aircraft monument in order to permit access to all the modules provided in said monument, in particular stowage compartments. For example, the flight attendant seat may be displaceable along a rail or another suitable guiding device which may be fastened to a wall of the aircraft monument and/or the floor of the aircraft cabin. The flight attendant seat may, particularly if the aircraft monument has a circular floor plan, be rotatable relative to said monument. For example, the flight attendant seat may be fastened to a wall of the aircraft monument in a rotatable manner. If the aircraft monument comprises a number of flight attendant seats, it is possible to provide a fastening device for fastening all the flight attendant seats to the aircraft monument, which device is displaceable, in particular rotatable, together with the flight attendant seats, relative to the aircraft monument.

Preferred forms of embodiment of the invention will now be explained in greater detail with the aid of the appended diagrammatic drawings, in which:
- Figure 1: shows a plan view of an aircraft area in which an aircraft monument having a circular floor plan is arranged;
- Figure 2: shows a three-dimensional representation of the aircraft area according to Figure 1;
- Figure 3: shows a three-dimensional representation of the aircraft monument arranged in the aircraft area according to Figure 1;
- Figure 4: shows a plan view of an aircraft area, in which an aircraft monument having a square floor plan is arranged;
- Figure 5: shows a three-dimensional representation of the aircraft area according to Figure 4;
- Figure 6: shows a plan view of the aircraft area according to Figure 4, in a detail representation; and
- Figure 7: shows a plan view of an aircraft area, in which an aircraft monument having a hexagonal floor plan is arranged, in a detail representation.

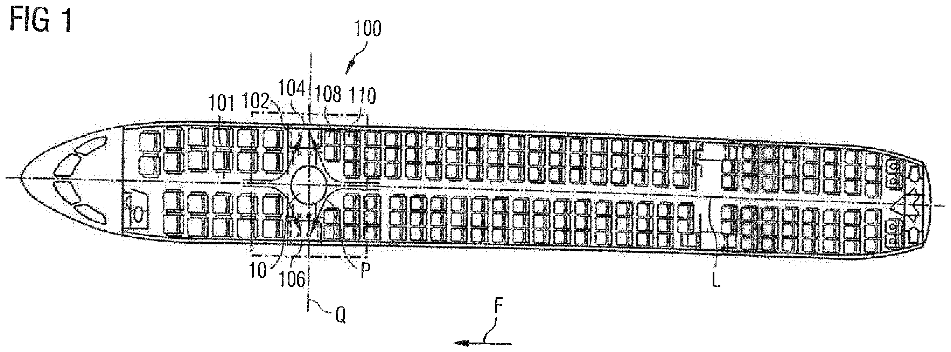

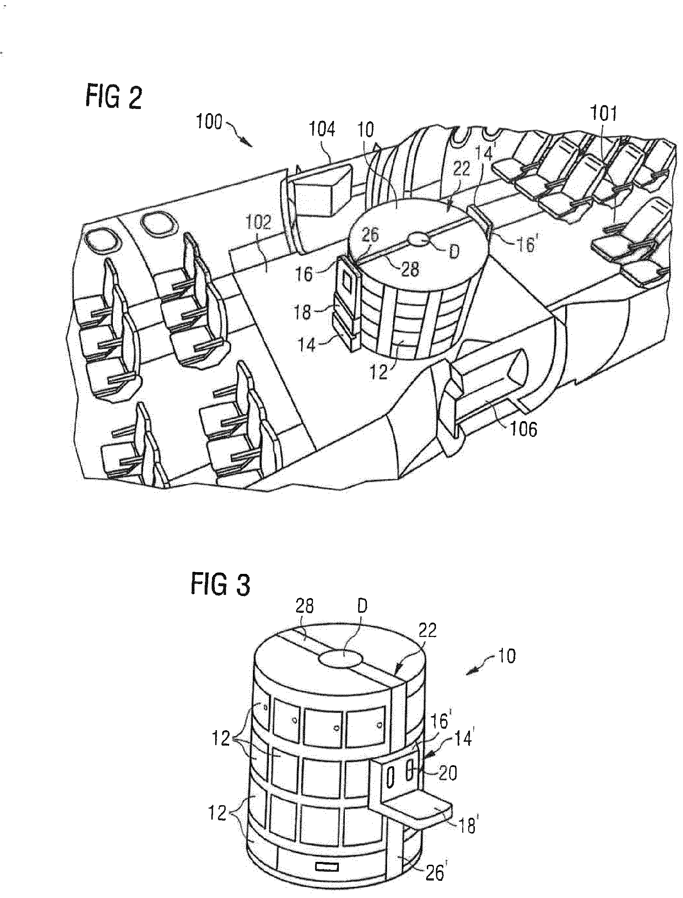

Figures 1 and 2 show an aircraft area 100 which is formed by part of an aircraft cabin. Said aircraft area 100 comprises a main aisle 101, which extends along a longitudinal axis L of the aircraft cabin, as well as a door aisle 102 which extends, substantially perpendicularly to the main aisle 101, along a transverse axis Q of the aircraft cabin between a first and a second aircraft door 104, 106. The door aisle 102 consequently separates a front part of the aircraft cabin from a rear part of said cabin, viewed in the direction of flight F.

An aircraft monument 10 is arranged substantially centrally in the door aisle 102. As can be seen most clearly in Figures 2 and 3, the aircraft monument 10 has the shape of a column with a circular floor plan, and forms a stowage compartment module in which a plurality of standard stowage compartments 12 is accommodated. As an alternative to this, a kitchen module or a sanitary module may also be accommodated in the aircraft monument 10. Said aircraft monument 10 is designed in such a way, that is to say is so dimensioned and positioned, that it may serve as a sight screen and means of separation between two sections of the aircraft area 100 which are formed by a part of the aircraft cabin which is at the front, with respect to the aircraft monument 10, and also a part of said cabin which is at the rear, with respect to said aircraft monument 10. The two sections of the aircraft area 100 in question may be different classes, for example areas of the aircraft cabin which are assigned to business class and to economy class.

As a result of the central arrangement in the door aisle 102, the aircraft monument 10 acts as part of a directing system in the event of an emergency evacuation of the aircraft. In particular, the aircraft monument 10 fulfils a guiding function for persons moving along the main aisle 101 towards the aircraft doors 104, 106, since these persons are directed, as indicated by the arrows P in Figure 1, along the outer faces of the aircraft monument 10 towards said aircraft doors 104, 106. Outer walls of the aircraft monument 10 are designed, i.e. are suitably shaped and dimensioned, in such a way that they serve as means of guidance for passengers who are moving towards the first and/or the second aircraft door 104, 106 when disembarking from the aircraft or in the event of an emergency evacuation of said aircraft. This makes it possible to increase the door capacity, i.e. to increase the numbers of persons who are able to leave the aircraft via the aircraft doors 104, 106 per unit of time.

As becomes clear in Figure 1, the number and/or the arrangement of internal trim components which are adjacent to the aircraft monument 10 in the aircraft area 100 may be adapted to the shape and the dimensions of said aircraft monument 10. In particular, a row of passenger seats 108 which is adjacent to the aircraft monument 10 may comprise one passenger seat fewer than a row of passenger seats 110 which is arranged, viewed in the direction of flight F of an aircraft equipped with the aircraft area, behind the row of seats 108 which is adjacent to the aircraft monument 10. All the internal trim components adjacent to the aircraft monument 10 which is arranged centrally in the door aisle 102 are positioned at a distance from said aircraft monument 10 which allows unimpeded passage between the aircraft monument 10 and the adjacent internal trim components.

As is represented in Figures 2 and 3, the aircraft monument 10 comprises two flight attendant seats 14, 14' which each face towards a section of the main aisle 101 bordering on the door aisle 102. Said flight attendant seats 14, 14' are arranged substantially centrally with respect to the main aisle 101, so that persons sitting on the flight attendant seats 14, 14' are able to have a clear and unimpeded overview of areas of the aircraft cabin which are arranged in front of the aircraft monument 10 in the direction of viewing of the persons sitting on said flight attendant seats 14, 14'. Each flight attendant seat 14, 14' comprises a backrest element 16, 16' as well as a seat element 18, 18'. The seat element 18, 18' can be tilted between a folded-down position of use, in which said seat element 18, 18' extends substantially perpendicularly to the backrest element 16, 16' (see Figure 3), and an inoperative position in which the seat element 18, 18' is oriented substantially parallel to said backrest element 16, 16' (see Figure 2). This guarantees that the flight attendant seats 14, 14' take up a reduced volume of installation space when they are not being used.

The aircraft monument 10 also comprises two safety belt arrangements 20, so that a corresponding safety belt arrangement 20 is associated with each flight attendant seat 14, 14'. The safety belt arrangements 20 are fastened to the flight attendant seats 14, 14'.

For their part, the flight attendant seats 14, 14' are fastened to the aircraft monument 10 in a force-transmitting manner by means of a fastening device 22. Said fastening device 22 is designed and dimensioned in such a way that it is capable of dissipating, via the aircraft monument 10, a predetermined maximum force which may be introduced into the flight attendant seats 14, 14' when the latter are being used. The aircraft monument 10 is likewise designed and dimensioned in such a way that it is capable of transmitting the maximum force introduced into said aircraft monument 10 to the aircraft structure. In particular, the fastening device 22 and the aircraft monument 10 are capable of dissipating a force which acts upon the flight attendant seats 14, 14' when they are exposed to an acceleration of 9G or 16G.

The flight attendant seats 14, 14' are fastened to the aircraft monument 10 by the fastening device 22 so as to be rotatable relative to said aircraft monument 10. In particular, the fastening device 22 has two bearers 26, 26' to which the flight attendant seats 14, 14' are fastened. For their part, said bearers 26, 26' are connected to one another by means of a connecting element 28 which spans an upper side of the aircraft monument 10. The flight attendant seats 14, 14' can be moved, relative to the aircraft monument 10, as a result of a rotation of the fastening device 22, with said flight attendant seats 14, 14' fastened to it, about an axis of rotation D. This permits access to all the stowage compartments 12 provided in the aircraft monument 10.

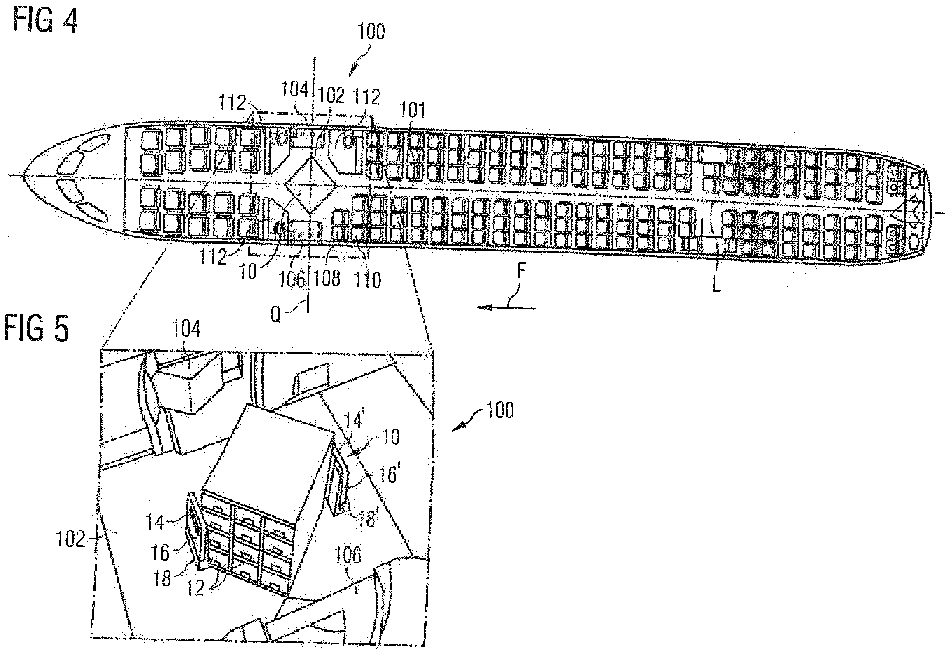

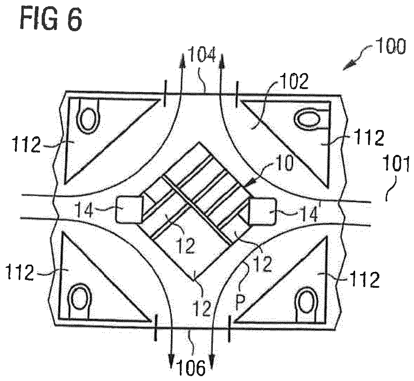

An aircraft area 100 which is illustrated in Figures 4 to 6 differs from the arrangement according to Figures 1 to 3 through the fact that the aircraft monument 10 has a substantially square floor plan, i.e. is designed in the form of a column having a substantially square floor plan. Stowage compartments 12 of different size are accommodated in the aircraft monument 10.

The aircraft monument 10 having a square floor plan is arranged in the door aisle 102 in such a way that two mutually opposed corners of the floor plan face towards two sections of the main aisle 101 which are separated from one another by said door aisle 102. The corners of the floor plan are arranged substantially centrally with respect to the sections of the main aisle 101. What is achieved by means of this arrangement is that a flow of persons moving along the main aisle 101 towards the aircraft doors 104, 106 is particularly evenly divided and directed along the outer walls of the aircraft monument 10 to the two aircraft doors 104, 106 which are located opposite one another. It is thereby possible to use the aircraft monument 10, with respect to the two sections of the main aisle 101 that border on the door aisle 102, particularly effectively as part of a directing system for emergency evacuations.

The shape and the arrangement of internal trim components which are adjacent to the aircraft monument 10 in the aircraft area 100 are adapted to the shape and the dimensions of said aircraft monument 10. In particular, monuments 112 adjacent to the aircraft monument 10 which is arranged centrally in the door aisle 102 have outer walls which are oriented parallel to outer walls of said aircraft monument 10 which is arranged centrally in the door aisle. Three of the monuments 112 are constructed in the form of a sanitary module; on the other hand, one of the monuments 112 is designed as a stowage compartment module. As in the arrangement according to Figures 1 to 3, in the aircraft area 100 according to Figures 4 to 6 likewise, all the internal trim components adjacent to the aircraft monument 10 which is arranged centrally in the door aisle 101 are positioned at a distance from said aircraft monument 10 which allows unimpeded passage between the aircraft monument 10 and the adjacent internal trim components.

In a manner similar to the arrangement according to Figures 1 to 3, the aircraft monument 10 illustrated in Figures 4 to 6 likewise has two flight attendant seats 14, 14' which each face towards a section of the main aisle 101 bordering on the door aisle 102 and are arranged substantially centrally with respect to said main aisle 101. In particular, the flight attendant seats 14, 14' are positioned in front of the two mutually opposed corners of the aircraft monument 10 which face towards the two sections of the main aisle 101 that are separated from one another by the door aisle 102. This once again makes it possible for persons sitting on the flight attendant seats 14, 14' to have a clear and unimpeded overview of areas of the aircraft cabin which are arranged in front of the aircraft monument 10 in the direction of viewing of the persons sitting on the flight attendant seats 14, 14'.

The flight attendant seats 14, 14' are fastened to a floor of the aircraft cabin in such a way that a predetermined maximum force, which may be introduced into said flight attendant seats 14, 14' when they are being used, can be transmitted to the aircraft structure. In particular, the flight attendant seats 14, 14' are fastened to the floor of the aircraft cabin in such a way that it is possible to dissipate a force which acts upon said flight attendant seats 14, 14' when they are exposed to an acceleration of 9G or 16G. However, in order to allow unhindered access to all stowage compartments 12 accommodated in the aircraft monument 10, the flight attendant seats 14, 14' are displaceable relative to the aircraft monument 10 along a rail or another suitable guiding device (not shown) which may be fastened to a wall of the aircraft monument 10 and/or the floor of the aircraft cabin.

In other respects, the structure and functioning of the aircraft area 100 according to Figures 4 to 6 correspond to the structure and functioning of the arrangement according to Figures 1 to 3.

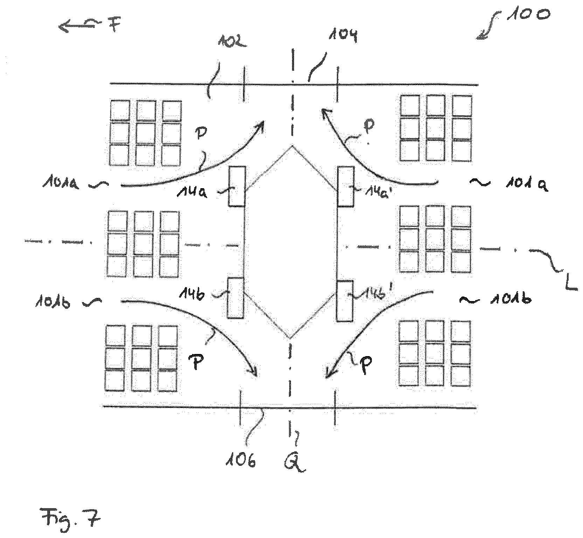

An aircraft area 100 which is illustrated in Figure 7 differs from the arrangement according to Figures 4 to 6 through the fact that the aircraft area 100 comprises two main aisles 101a, 101b which extend substantially parallel to each other along the longitudinal axis L of the aircraft cabin. The aircraft monument 10 has a substantially hexagonal floor plan, i.e. is designed in the form of a column having a substantially hexagonal floor plan. Like in the arrangement of Figures 4 to 6, stowage compartments of different size (not shown) are accommodated in the aircraft monument 10.

The aircraft monument 10 having a hexagonal floor plan is arranged in the door aisle 102 in such a way that two mutually opposed corners of the floor plan which define an acute angle face towards the two aircraft doors 104, 106. Furthermore, each of the four remaining corners of the floor plan which define an obtuse angle faces a section of one of the main aisles 101a, 101b, wherein the sections of the main aisles 101a, 101b are separated from one another by said door aisle 102. The corners of the floor plan which define an obtuse angle are arranged substantially centrally with respect to the sections of the main aisle 101. What is achieved by means of this arrangement is that a flow of persons moving along the main aisles 101a, 101b towards the aircraft doors 104, 106 is particularly evenly divided and directed along the outer walls of the aircraft monument 10 to the two aircraft doors 104, 106 which are located opposite one another. It is thereby again possible to use the aircraft monument 10, with respect to the two sections of the two main aisles 101a, 101b that border on the door aisle 102, particularly effectively as part of a directing system for emergency evacuations.

The aircraft monument 10 illustrated in Figure 7 has four flight attendant seats 14a, 14a', 14b, 14b' which each face towards a section of one of the two main aisles 101a, 101b bordering on the door aisle 102 and are arranged substantially centrally with respect to said main aisle sections. In particular, the flight attendant seats 4a, 14a', 14b, 14b' are positioned in front of the four corners of the aircraft monument 10 which define an obtuse angle an which face towards the sections of the main aisles 101a, 101b that are separated from one another by the door aisle 102. This once again makes it possible for persons sitting on the flight attendant seats 14a, 14a', 14b, 14b' to have a clear and unimpeded overview of areas of the aircraft cabin which are arranged in front of the aircraft monument 10 in the direction of viewing of the persons sitting on the flight attendant seats 14a, 14a', 14b, 14b'.

In other respects, the structure and functioning of the aircraft area 100 according to Figure 7 correspond to the structure and functioning of the arrangement according to Figures 4 to 6.

## Claims

1. Aircraft area (100) having:
- at least one main aisle (101; 101a, 101b) which extends along a longitudinal axis (L) when arranged in an aircraft cabin;
- a door aisle (102) which extends, substantially perpendicularly to the at least one main aisle (101; 101a, 101b), along a transverse axis (Q) when arranged in the aircraft cabin between a first and a second aircraft door (104, 106); and
- an aircraft monument (10) which is arranged substantially centrally in the door aisle (102), wherein the door aisle (102) is configured to separate two passenger seat sections of the aircraft cabin,
**characterised in that** the aircraft monument (10) is arranged to guide persons moving along the main aisle (101; 101a, 101b) toward the first and/or second aircraft doors (104, 106) along outer walls of the aircraft monument (10), and
wherein the aircraft monument (10) comprises at least one safety belt arrangement (20).

2. Aircraft area according to Claim 1,
**characterised in that** the aircraft monument (10) has a substantially circular, oval, triangular, square, rectangular or hexagonal floor plan.

3. Aircraft area according to Claim 1 or 2,
**characterised in that** the outer walls of the aircraft monument (10) are dimensioned and shaped in such a way that they are adapted to serve as means of guidance for passengers who are moving, when disembarking from the aircraft or in the event of an emergency evacuation of said aircraft, towards the first and/or the second aircraft door (104, 106).

4. Aircraft area according to one of Claims 1 to 3,
**characterised in that** the aircraft monument (10) is adapted to serve as a sight screen and/or means of separation between two sections of the aircraft area (100).

5. Aircraft area according to one of Claims 1 to 4,
**characterised in that** the aircraft monument (10) is arranged in the door aisle (102) in such a way that at least one corner of a floor plan of the aircraft monument faces towards a section of a main aisle (101; 101a, 101b) bordering on the door aisle (102) and is arranged, in particular, substantially centrally with respect to said section of the main aisle (101; 101a, 101b), wherein, when dependent on Claim 2, the aircraft monument (10) is limited to having a triangular, square, rectangular or hexagonal floor plan.

6. Aircraft area according to one of Claims 1 to 5,
**characterised in that** the aircraft monument (10) is arranged in the door aisle (102) in such a way that at least one corner of a floor plan of the aircraft monument (10) faces towards the first and/or the second aircraft door (104, 106), wherein, when dependent on Claim 2, the aircraft monument (10) is limited to having a triangular, square, rectangular or hexagonal floor plan.

7. Aircraft area according to one of Claims 1 to 6,
**characterised in that** the shape, the number and/or the arrangement of internal trim components (108; 112) which are adjacent to the aircraft monument (10) in the aircraft area (100), is/are adapted to the shape and the dimensions of said aircraft monument (10).

8. Aircraft area according to one of Claims 1 to 7,
**characterised in that** the aircraft monument (10) comprises a kitchen module, a stowage compartment module and/or a sanitary module.

9. Aircraft area according to one of Claims 1 to 8,
**characterised in that** the aircraft monument (10) comprises at least one flight attendant seat (14, 14'; 14a, 14a', 14b, 14b') which faces towards a section of a main aisle (101; 101a, 101b) bordering on the door aisle (102) and is arranged, in particular, substantially centrally with respect to said section of the main aisle (101; 101a, 101b).

10. Aircraft area according to Claim 9,
**characterised in that** the flight attendant seat (14, 14'; 14a, 14a', 14b, 14b') is fastened to the aircraft monument (10) by means of a fastening device which is designed and dimensioned in such a way that it is capable of dissipating, via the aircraft monument (10), a predetermined maximum force which may be introduced into the flight attendant seat (14, 14'; 14a, 14a', 14b, 14b') when said flight attendant seat (14, 14'; 14a, 14a', 14b, 14b') is being used.

11. Aircraft area according to one of Claims 9 or 10,
**characterised in that** the flight attendant seat (14, 14'; 14a, 14a', 14b, 14b') is displaceable, in particular rotatable, relative to the aircraft monument (10).

## Patentansprüche

1. Flugzeugbereich (100) aufweisend:
- mindestens einen Hauptgang (101; 101a, 101b), der sich entlang einer Längsachse (L) erstreckt, wenn er in einer Flugzeugkabine angeordnet ist,
- einen Türgang (102), der sich im Wesentlichen senkrecht zu dem mindestens einen Hauptgang (101; 101a, 101b) entlang einer Querachse (Q) erstreckt, wenn er in der Flugzeugkabine zwischen einer ersten und einer zweiten Flugzeugtür (104, 106) angeordnet ist, und
- ein Flugzeugmonument (10), das im Wesentlichen mittig in dem Türgang (102) angeordnet ist,
wobei der Türgang (102) zum Trennen von zwei Passagiersitzabschnitten der Flugzeugkabine ausgestaltet ist,
**dadurch gekennzeichnet, dass**
das Flugzeugmonument (10) dazu angeordnet ist, Personen, die sich entlang des Hauptgangs (101; 101a, 101b) zu der ersten und/oder der zweiten Flugzeugtür (104, 106) hin bewegen, entlang von Außenwänden des Flugzeugmonuments (10) zu führen, und
wobei das Flugzeugmonument (10) mindestens eine Sicherheitsgurtanordnung (20) umfasst.

2. Flugzeugbereich nach Anspruch 1,
**dadurch gekennzeichnet, dass** das Flugzeugmonument (10) einen im Wesentlichen kreisförmigen, ovalen, dreieckigen, quadratischen, rechteckigen oder hexagonalen Grundriss hat.

3. Flugzeugbereich nach Anspruch 1 oder 2,
**dadurch gekennzeichnet, dass** die Außenwände des Flugzeugmonuments (10) so bemessen und gestaltet sind, dass sie dazu ausgeführt sind, als Mittel zum Führen für Passagiere, die sich beim Aussteigen aus dem Flugzeug oder zu der ersten und/oder der zweiten Flugzeugtür (104, 106) hin bewegen, zu dienen.

4. Flugzeugbereich nach einem der Ansprüche 1 bis 3,
**dadurch gekennzeichnet, dass** das Flugzeugmonument (10) dazu ausgeführt ist, als Blickschutz und/oder Trennmittel zwischen zwei Abschnitten des Flugzeugbereichs (100) zu dienen.

5. Flugzeugbereich nach einem der Ansprüche 1 bis 4,
**dadurch gekennzeichnet, dass** das Flugzeugmonument (10) so in dem Türgang (102) angeordnet ist, dass mindestens eine Ecke eines Grundrisses des Flugzeugmonuments einem an den Türgang (102) angrenzenden Abschnitt eines Hauptgangs (101; 101a, 101b) zugewandt ist, und insbesondere im Wesentlichen mittig bezüglich des Abschnitts des Hauptgangs (101; 101a, 101b) angeordnet ist, wobei, wenn von Anspruch 2 abhängig, das Flugzeugmonument (10) auf einen dreieckigen, quadratischen, rechteckigen oder hexagonalen Grundriss begrenzt ist.

6. Flugzeugbereich nach einem der Ansprüche 1 bis 5,
**dadurch gekennzeichnet, dass** das Flugzeugmonument (10) so in dem Türgang (102) angeordnet ist, dass dass mindestens eine Ecke eines Grundrisses des Flugzeugmonuments (10) der ersten und/oder der zweiten Flugzeugtür (104, 106) zugewandt ist, wobei, wenn von Anspruch 2 abhängig, das Flugzeugmonument (10) auf einen dreieckigen, quadratischen, rechteckigen oder hexagonalen Grundriss begrenzt ist.

7. Flugzeugbereich nach einem der Ansprüche 1 bis 6,
**dadurch gekennzeichnet, dass** die Form, die Anzahl und/oder die Anordnung von Innendekorteilen (108; 112), die dem Flugzeugmonument (10) in dem Flugzeugbereich (100) benachbart sind, an die Form und die Abmessungen des Flugzeugmonuments (10) angepasst ist/sind.

8. Flugzeugbereich nach einem der Ansprüche 1 bis 7,
**dadurch gekennzeichnet, dass** das Flugzeugmonument (10) ein Bordküchenmodul, ein Verstaufachmodul und/oder ein Sanitärmodul umfasst.

9. Flugzeugbereich nach einem der Ansprüche 1 bis 8,
**dadurch gekennzeichnet, dass** das Flugzeugmonument (10) mindestens einen Flugbegleitersitz (14, 14'; 14a, 14a', 14b, 14b') umfasst, der einem an den Türgang (102) angrenzenden Abschnitt eines Hauptgangs (101; 101a, 101b) zugewandt ist und insbesondere im Wesentlichen mittig bezüglich des Abschnitts des Hauptgangs (101; 101a, 101b) angeordnet ist.

10. Flugzeugbereich nach Anspruch 9,
**dadurch gekennzeichnet, dass** der Flugbegleitersitz (14, 14'; 14a, 14a', 14b, 14b') mittels einer Befestigungsvorrichtung an dem Flugzeugmonument (10) befestigt ist, die so ausgelegt und bemessen ist, dass sie in der Lage ist, eine vorbestimmte Maximalkraft, die in den Flugbegleitersitz (14, 14'; 14a, 14a', 14b, 14b') eingeführt werden kann, wenn sich der Flugbegleitersitz (14, 14'; 14a, 14a', 14b, 14b') im Gebrauch befindet, über das Flugzeugmonument (10) abzuleiten.

11. Flugzeugbereich nach einem der Ansprüche 9 oder 10,
**dadurch gekennzeichnet, dass** der Flugbegleitersitz (14, 14'; 14a, 14a', 14b, 14b') bezüglich des Flugzeugmonuments (10) verschiebbar, insbesondere drehbar, ist.

## Revendications

1. Zone d'avion (100) ayant:
au moins une allée principale (101; 101a, 101b) qui s'étend le long d'un axe longitudinal (L) lorsqu'elle est disposée dans une cabine d'avion ;
une allée de porte (102) qui s'étend, sensiblement perpendiculairement à l'au moins une allée principale (101; 101a, 101b), le long d'un axe transversal (Q) lorsqu'elle est disposée dans la cabine d'avion entre une première et une seconde porte d'avion (104, 106); et
un monument d'avion (10) qui est disposé sensiblement au centre de l'allée de porte (102),
l'allée de porte (102) étant conçue pour séparer deux sections de sièges passagers de la cabine d'avion, **caractérisée en ce que**
le monument d'avion (10) est conçu pour guider les personnes se déplaçant le long de l'allée principale (101; 101a, 101b) vers les première et/ou seconde portes d'avion (104, 106) le long de parois extérieures du monument d'avion (10), et
le monument d'avion (10) comprenant au moins un dispositif de ceinture de sécurité (20).

2. Zone d'avion selon la revendication 1,
**caractérisée en ce que** le monument d'avion (10) a un plan au sol sensiblement circulaire, ovale, triangulaire, carré, rectangulaire ou hexagonal.

3. Zone d'avion selon la revendication 1 ou 2,
**caractérisée en ce que** les parois extérieures du monument d'avion (10) sont dimensionnées et façonnées de sorte à être conçues pour servir de moyen de guidage pour les passagers qui se déplacent, lors du débarquement de l'avion ou en cas d'évacuation d'urgence dudit avion, vers la première et/ou la seconde porte d'avion (104, 106).

4. Zone d'avion selon l'une des revendications 1 à 3,
**caractérisée en ce que** le monument d'avion (10) est conçu pour servir de pare-vue et/ou de moyen de séparation entre deux sections de la zone d'avion (100).

5. Zone d'avion selon l'une des revendications 1 à 4,
**caractérisée en ce que** le monument d'avion (10) est disposé dans l'allée de porte (102) de sorte qu'au moins un coin d'un plan au sol du monument d'avion soit tourné vers une section d'une allée principale (101 ; 101a, 101b) bordant l'allée de porte (102) et est disposé, en particulier, sensiblement au centre par rapport à ladite section de l'allée principale (101 ; 101a, 101b), lorsqu'elle dépend de la revendication 2, le monument d'avion (10) étant limité à avoir un plan au sol triangulaire, carré, rectangulaire ou hexagonal.

6. Zone d'avion selon l'une des revendications 1 à 5,
**caractérisée en ce que** le monument d'avion (10) est disposé dans l'allée de porte (102) de sorte qu'au moins un coin d'un plan au sol du monument d'avion (10) soit orienté vers la première et/ou la seconde porte d'avion (104, 106), lorsqu'elle dépend de la revendication 2, le monument d'avion (10) étant limité à avoir un plan au sol triangulaire, carré, rectangulaire ou hexagonal.

7. Zone d'avion selon l'une des revendications 1 à 6,
**caractérisée en ce que** la forme, le nombre et/ou la disposition des composants de garniture internes (108; 112) qui sont adjacents au monument d'avion (10) dans la zone d'avion (100), est/sont adaptés à la forme et aux dimensions dudit monument d'avion (10).

8. Zone d'avion selon l'une des revendications 1 à 7,
**caractérisée en ce que** le monument d'avion (10) comprend un module de cuisine, un module de compartiment de rangement et/ou un module sanitaire.

9. Zone d'avion selon l'une des revendications 1 à 8,
**caractérisée en ce que** le monument d'avion (10) comprend au moins un siège d'agent de bord (14, 14' ; 14a, 14a', 14b, 14b') qui est tourné vers une section d'une allée principale (101 ; 101a, 101b) bordant l'allée de porte (102) et est disposé, en particulier, sensiblement au centre par rapport à ladite section de l'allée principale (101 ; 101a, 101b).

10. Zone d'avion selon la revendication 9,
**caractérisée en ce que** le siège d'agent de bord air (14, 14' ; 14a, 14a', 14b, 14b') est fixé au monument d'avion (10) au moyen d'un dispositif de fixation qui est conçu et dimensionné de sorte qu'il puisse dissiper, par l'intermédiaire du monument d'avion (10), une force maximale prédéfinie qui peut être introduite dans le siège d'agent de bord (14, 14' ; 14a, 14a', 14b, 14b') lorsque ledit siège d'agent de bord (14, 14' ; 14a, 14a', 14b, 14b') est utilisé.

11. Zone d'avion selon la revendication 9 ou 10,
**caractérisée en ce que** le siège d'agent de bord (14, 14'; 14a, 14a', 14b, 14b') peut être déplacé, en particulier peut être tourné, par rapport au monument d'avion (10).
